# EUROPÄISCHE PATENTSCHRIFT

(11) **EP 0 975 469 B1**
(45) Veröffentlichungstag und Bekanntmachung des Hinweises auf die Patenterteilung: **02.07.2003**
(21) Anmeldenummer: 99910166.0
(22) Anmeldetag: 29.01.1999
(51) Int. Cl.: B41M 3/14, B42D 15/00, B42D 15/10, G07D 7/00, G06K 19/14, G09F 3/00

(54) **BEDRUCKTES WERTDOKUMENT MIT EINEM LUMINESZIERENDEN ECHTHEITSMERKMAL AUS WIRTSGITTER**
PRINTED DOCUMENT HAVING A VALUE AND COMPRISING A LUMINESCENT AUTHENTICITY FEATURE BASED ON A HOST LATTICE
DOCUMENT DE VALEUR IMPRIME COMPORTANT UNE CARACTERISTIQUE D'AUTHENTICITE LUMINESCENTE CONSTITUEE D'UNE TRAME INTRINSEQUE

(30) Priorität: 02.02.1998 DE 19804021
(43) Veröffentlichungstag der Anmeldung: 02.02.2000
(73) Patentinhaber: Giesecke & Devrient GmbH, 81677 München (DE)
(72) Erfinder: KAULE, Wittich, D-82275 Emmering (DE); SCHWENK, Gerhard, D-82178 Puchheim (DE); STENZEL, Gerhard, D-82110 Germering (DE)
(74) Vertreter: Klunker . Schmitt-Nilson . Hirsch
(86) Internationale Anmeldenummer: EP9900594
(87) Internationale Veröffentlichungsnummer: WO99038701

(56) Entgegenhaltungen:
- WO-A-81/03510

## Beschreibung

Die Erfindung betrifft ein bedrucktes Wertdokument mit zumindest einem Echtheitsmerkmal in Form einer lumineszierenden Substanz mit wenigstens einem Seltenerdmetall dotierten Wirtsgitter.

Die Absicherung von Wertdokumenten mittels lumineszierender Substanzen ist bereits seit langem bekannt. Auch die Verwendung von Seltenerdmetallen wurde in diesem Zusammenhang bereits diskutiert. Sie haben den Vorteil, dass sie im infraroten Spektralbereich schmalbandige Emissionslinien aufweisen, die besonders charaktreristisch sind und deshalb von Emissionslinien anderer Stoffe messtechnisch gut unterscheidbar sind. Bei diesen Lumineszenzstoffen auf der Basis von Seltenerdmetallen handelt es sich üblicherweise um mit einem Seltenerdmetall dotierten Wirtsgitter. Zum Nachweis dieses Lumineszenzstoffs wird er einer Lichtquelle ausgesetzt, deren Emissionsspektrum mit dem Anregungsspektrum des Seltenerdmetalls weitgehend überlappt und die dadurch induzierte Emission des Lumineszenzstoffs selektiv erfasst.

Um die Emissionsintensität des Lumineszenzstoffes zu erhöhen, wurde auch bereits vorgeschlagen, co-aktivierte Leuchtstoffe zu verwenden. Sie enthalten die beiden Seltenerdmetalle Neodym (Nd) und Ytterbium (Yb) als Aktivator. In diesem Fall wird das Nd mittels einer GaAs-Diode im Bereich von 800 nm selektiv angeregt, das die absorbierte Energie mit einem hohen Wirkungsgrad an das Yb überträgt und damit die Emission des Yb induziert.

Der Erfindung liegt nun die Aufgabe zugrunde, ein Wertdokument mit einer lumineszierenden Substanz auf der Basis von mit Seltenerdmetallen dotierten Wirtsgittern zur Verfügung zu stellen, die im sichtbaren Spektralbereich anregbar ist und eine hohe Emissionsintensität im nahen IR-Spektralbereich aufweisen.

Die Lösung dieser Aufgabe ergibt sich aus den Merkmalen der unabhängigen Ansprüche.Weiterbildungen sind Gegenstand der Unteransprüche.

Die Erfindung geht von dem Grundgedanken aus, dass die Emissionsintensität erhöht werden kann, wenn das Wirtsgitter selbst absorbierende Bestandteile aufweist, die breitbandig absorbieren und die diese Energie mit einem hohen Wirkungsgrad auf die lumineszierenden Seltenerdmetalle übertragen. Vorzugsweise werden hierfür Gitter eingesetzt, die einerseits im gesamten visuellen Spektralbereich absorbieren, die aber andererseits bereits im nahen IR-Spektralbereich weitgehend transparent sind. Dies hat den Vorteil, dass für die Anregung der Lumineszenzstoffe starke Lichtquellen, wie Halogen-, Xenon-, Bogen- oder Blitzlampen verwendet werden können. Gleichzeitig soll das Wirtsgitter im Bereich der Emissionsbande des Lumineszenzstoffs optisch transparent sein. Gemäß der Erfindung liegt dieser Bereich im nahen IR-Spektralbereich zwischen 0,8 µm und 1,1 µm, so dass ein relativ breites, nichtabsorbierendes "Fenster" vorliegt, in dem die verschiedensten Emissionsspektren umgesetzt werden können.

Das erfindungsgemäße Wirtsgitter enthält als absorbierenden Bestandteil Chrom. Als Seitenerdmetall können hierbei Ytterbium, Praseodym oder Neodym eingesetzt werden. Das Wirtsgitter kann auch mehrere Seltenerdmetall-Dotierungen aufweisen.

Vorzugsweise weist das Wirtsgitter eine Granat- oder Perovskitstruktur auf.

Die absorbierenden Wirtsgitterbestandteile können teilweise durch das nichtabsorbierende Aluminium ersetzt werden. Über den Anteil an Aluminium lässt sich die Absorption und damit die Helligkeit der lumineszierenden Substanz steuern. Derartige Lumineszenzstoffe können daher auch als Zusatzstoffe für hellere Druckfarben eingesetzt werden.

Weitere Ausführungsformen und Vorteile der Erfindung werden im Folgenden anhand der Figur und der Beispiele erläutert:
- Fig. 1: Anregungsspektrum eines erfindungsgemäßen Lumineszenzstoffes,
- Fig. 2: Spektrum einiger Lichtquellen,
- Fig. 3: Emissionsspektrum eines erfindungsgemäßen Yb-dotierten Lumineszenzstoffes,
- Fig. 4: Emissionsspektrum eines erfindungsgemäßen Pr-dotierten Lumineszenzstoffes,
- Fig. 5: Emissionspektrum eines erfindungsgmäßen Nd-dotierten Lumineszenzstoffes,
- Fig. 6: erfindungsgemäßes Sicherheitselement im Querschnitt.

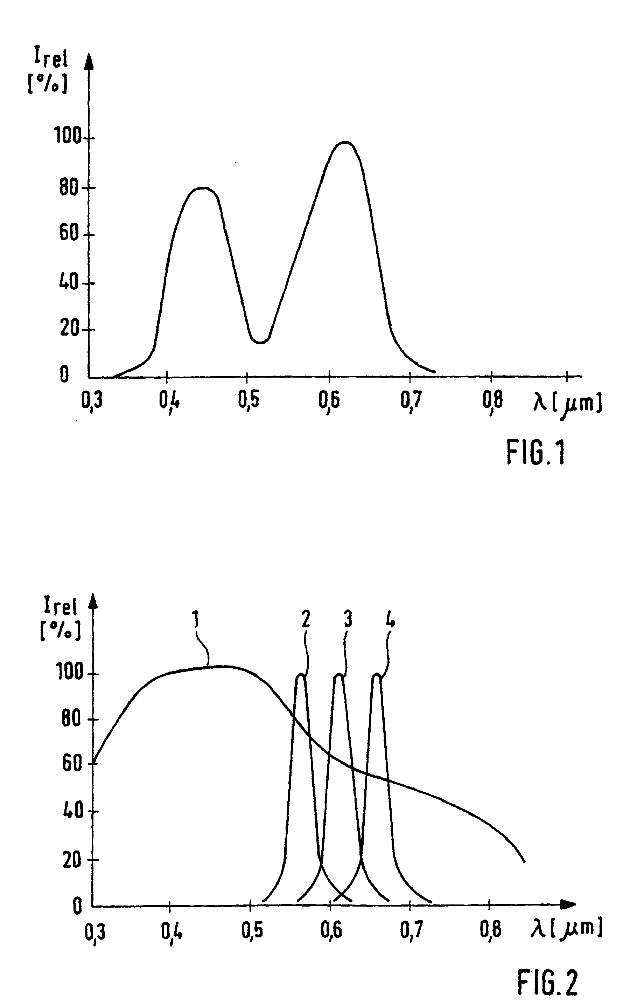

Fig.1 zeigt das Anregungsspektrum eines erfindungsgemäßen Lumineszenzstoffes. Dieser Lumineszenzstoff besteht aus einem mit zumindest einem Seltenerdmetall dotiertem, chromhaltigen Wirtsgitter. Das Wirtsgitter absorbiert fast im gesamten sichtbaren Spektralbereich. Durch diese sehr breitbandige Absorption des Wirtsgitters werden die in diesem Bereich liegenden Linien der Seltenerdmetall-Dotierungen unterdrückt. Gleichzeitig findet ein Energieübertrag des Wirtsgitters auf die Seltenerdmetall-Dotierung statt, durch welche die Emission des Lumineszenzstoffes induziert wird. Auf diese Weise erfolgt eine im Vergleich zur schmalbandigen, gezielten Anregung einzelner Emissionslinien wesentlich effektivere Anregung der Seltenerdmetalle, was auch zu höheren Emissionsintensitäten führt.

Die breitbandige Absorption des Gitters hat darüber hinaus den Vorteil, dass für die Anregung der Lumineszenzstoffe starke Lichtquellen, wie beispielsweise Blitzlampen verwendet werden können, die ebenfalls im gesamten sichtbaren Spektralbereich Strahlung aussenden.

In Fig. 2 ist das Spektrum einer solchen Blitzlampe mit dem Bezugszeichen 1 dargestellt. Das Spektrum 1 der dargestellten Blitzlampe reicht kontinuierlich vom UV-Spektralbereich bis in den IR-Spektralbereich. In manchen Fällen kann es auch sinnvoll sein, den Lumineszenzstoff lediglich mit Licht aus dem sichtbaren Spektralbereich zu beleuchten. In diesem Fall bietet sich eine Beleuchtung mit Leuchtdioden entsprechender Wellenlänge an. Leuchtdioden weisen im Allgemeinen ein schmalbandiges Spektrum auf, so dass zur Abdeckung des gesamten sichtbaren Spektralbereichs mehrere Leuchtdioden notwendig sind. In Fig. 2 sind die Spektren 2, 3, 4 einer grünen, orangenen und roten Leuchtdiode gezeigt, die sich gerade überlappen, so dass der gesamte sichtbare Spektralbereich abgedeckt wird.

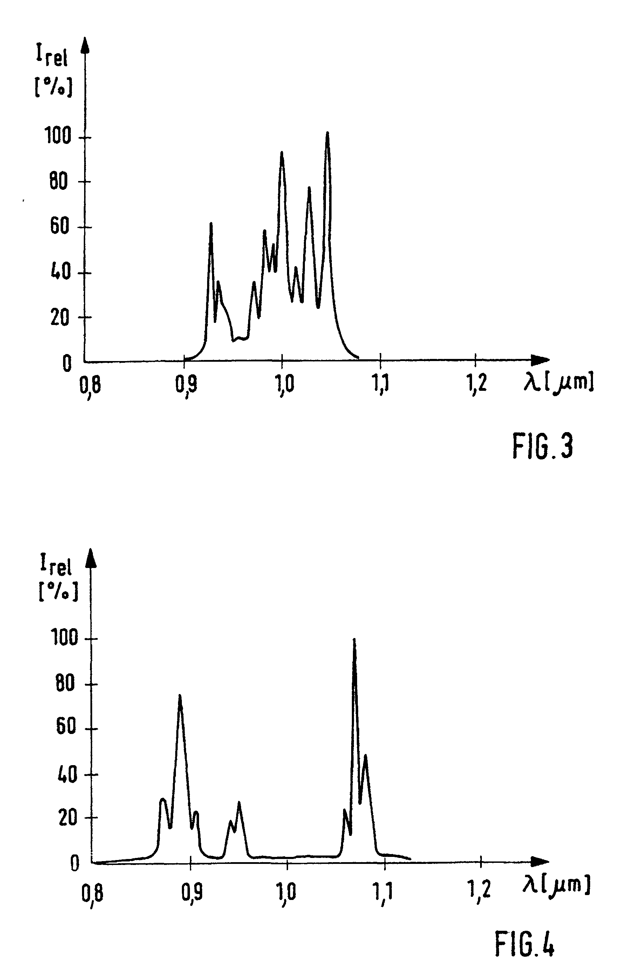

In Fig. 3, 4 und 5 sind die Emissionsspektren einzelner erfindungsgemäßer Lumineszenzstoffe dargestellt.

Fig. 3 zeigt das Emissionsspektrum eines Pr-dotierten Wirtsgitters. Das Spektrum reicht von ca. 0,9 µm bis ca. 1,08 µm. Es weist eine sehr charakteristische Zahl von Emissions-Peaks auf, die sehr gut als Echtheitsmerkmal ausgewertet werden können.

Fig. 4 zeigt das charakteristische Spektrum eines mit Nd-dotierten Wirtsgitters. Dieses Spektrum weist zwei relativ starke Emissions-Peaks im Wellenlängenbereich von ca. 0,9 µm und knapp unterhalb von 1,1 µm auf. Ein etwas kleinerer Peak befindet sich zudem im Wellenlängenbereich von 0,95 µm.

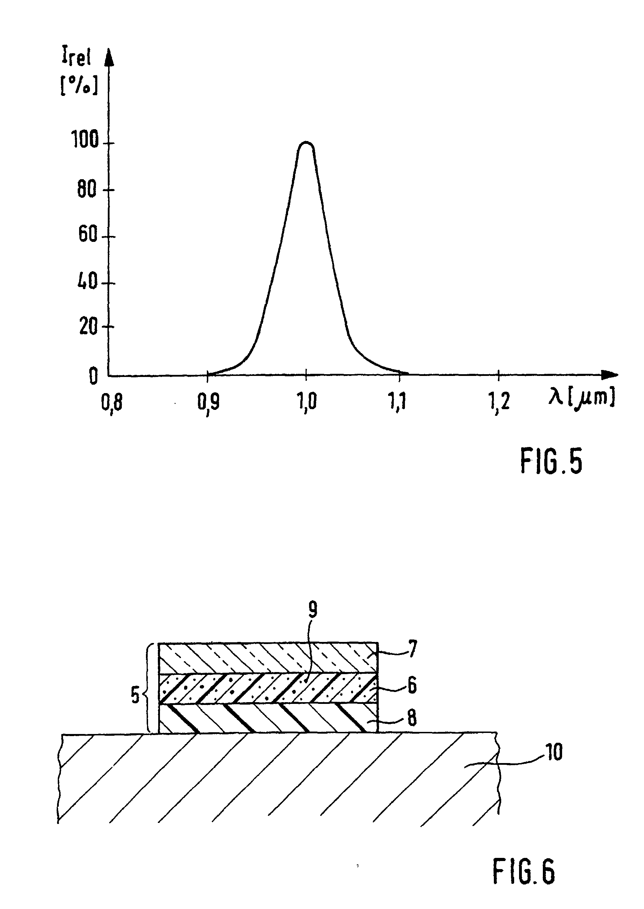

Das in Fig. 5 dargestellte Spektrum eines Yb-dotierten Wirtsgitters ist dagegen sehr symmetrisch und zeigt lediglich einen Peak, dessen Maximum bei einer Wellenlänge von 1 µm liegt.

All diesen erfindungsgemäßen Gittern ist gemeinsam, dass sie im nahen infraroten, d.h. im Bereich zwischen 0,8 µm und 1,1 µm eine sehr auffällige Lumineszenzemission zeigen. Obwohl alle drei Emissionsspektren im selben Spektralbereich angeordnet sind, unterscheiden sie sich so eindeutig voneinander, dass eine messtechnische Differenzierung gut möglich ist.

Um eine möglichst hohe Effektivität der Seltenerdmetalle zu gewährleisten, werden im Falle einer Granatstruktur Wirtsgitter mit der allgemeinen Formel

A₃Cr₅₋ₓAlₓO₁₂

verwendet, worin A für ein Element aus der Gruppe Scandium (Sc), Yttrium (Y), der Lanthanide und der Actinide steht und der Index x die Bedingung 0 < x < 5 erfüllt. Vorzugsweise bewegt sich der Index x im Bereich von 0,3 und 2,5.

Eine bevorzugte Ausführungsform des erfindungsgemäßen Lumineszenzstoffes in einer Granatstruktur lautet

Y_{3-z}D_{z}Cr₅₋ₓAlₓO₁₂,

worin D für Neodym, Praseodym oder Ytterbium steht und der Index z die Bedingung 0 < z < 1 erfüllt.

Liegt das Wirtsgitter in einer Perovskitstruktur vor, so lässt sich diese durch die allgemeine Formel

ACrO₃

beschreiben, worin A für ein Element aus der Gruppe Yttrium, Scandium und der Lanthanide steht.

Eine bevorzugte Ausführungsform des erfindungsgemäßen Lumineszenzstoffes in einer Perovskitstruktur lässt sich durch folgende Formel

Y_{1-z}D_{z}CrO₃

beschreiben, worin D für eines der Elemente Neodym, Praseodym und Ytterbium steht und der Index z die Bedingung 0 < z < 1 erfüllt.

Gemäß einer weiteren Ausführungsform können die jeweiligen Wirtsgitter jedoch auch mit mehreren Seltenerdmetallen dotiert werden.

Im Folgenden werden einige Beispiele der erfindungsgemäßen Lumineszenzstoffe näher erläutert.

### Beispiel 1:

### Herstellung von ytterbium/neodymaktiviertem Yttrium-Chrom-Aluminium-Mischgranat (Y_{2,75}Nd_{0,05}Yb_{0,2}Cr_{0,8}Al_{4,2}O₁₂):

49,04 g Yttriumoxid (Y₂O₃), 1,33 g Neodymoxid (Nd₂O₃), 6,22 Ytterbiumoxid (Yb₂O₃), 9,6 g Chromoxid (Cr₂O₃), 33,81 g Aluminiumoxid (Al₂O₃) und 100 g entwässertes Natriumsulfat (Na₂SO₄) werden innig vermischt und im Korundtiegel 12 Stunden auf 1100 °C erhitzt.

Nach dem Abkühlen wird das Reaktionsprodukt zerkleinert, mit Wasser als Flussmittel herausgewaschen, als Nebenprodukt entstandenes Natriumchromat mit Schwefelsäure/Eisen(II)sulfat zu Chrom(III)sulfat reduziert und bei 100 °C an Luft getrocknet. Zur Erzielung einer möglichst hohen Kornfeinheit wird das Pulver anschließend in einer Rührwerkskugelmühle in Wasser vermahlen bis eine mittlere Korngröße von kleiner als 1 µm vorliegt.

Nach dem Filtrieren und Trocknen erhält man ein hellgrünes Pulver.

### Beispiel 2:

### Herstellung von ytterbiumaktiviertem Yttrium-Chrom-Perovskit (Y_{0,85}Yb_{0,15}CrO₃):

47,62 g Yttriumoxid (Y₂O₃), 37,71 g Chromoxid (Cr₂O₃), 14,66 g Ytterbiumoxid (Yb₂O₃) und 100 g entwässertes Natriumsulfat (Na₂SO₄) werden innig vermischt und im Korundtiegel 20 Stunden auf 1100 °C erhitzt.

Nach dem Abkühlen wird das Reaktionsprodukt zerkleinert, mit Wasser das Flussmittel herausgewaschen, als Nebenprodukt entstandenes Natriumchromat mit Schwefelsäure/Eisen(II)sulfat zu Chrom(III)sulfat reduziert und bei 100 °C an Luft getrocknet. Zur Erzielung einer möglichst hohen Kornfeinheit wird das Pulver anschließend in einer Rührwerkskugelmühle in Wasser entsprechend vermahlen.

Nach dem Filtrieren und Trocknen erhält man ein hellgrünes Pulver mit einer mittleren Korngröße von kleiner als 1 µm.

### Beispiel 3:

### Herstellung von neodymaktiviertem Yttrium-Aluminium-Chrom-Mischgranat (Y_{2,91}Nd_{0,09}Cr_{1,6}Al_{3,4}O₁₂):

51,45 Yttriumoxid (Y₂O₃), 27,14 g Aluminiumoxid (Al₂O₃), 19,04 g Chrom(III)oxid (Cr₂O₃), 2,37 g Neodymoxid (Nd₂O₃) und 100 g entwässertes Natriumsulfat (Na₂SO₄) werden innig vermischt und im Korundtiegel 12 Stunden auf 1100 °C erhitzt.

Nach dem Abkühlen wird das Reaktionsprodukt zerkleinert, mit Wasser das Flussmittel herausgewaschen, als Nebenprodukt entstandenes Natriumchromat mit Schwefelsäure/Eisen(II)sulfat zu Chrom(III)sulfat reduziert, abfiltriert und bei 100 °C an Luft getrocknet. Zur Erzielung einer möglichst hohen Kornfeinheit wird das Pulver anschließend in einer Rührwerkskugelmühle in Wasser entsprechend vermahlen.

Nach dem Filtrieren und Trocknen erhält man ein hellgrünes Pulver mit einer mittleren Korngröße von kleiner als 1 µm.

### Beispiel 4:

### Herstellung von ytterbiumaktiviertem Yttrium-Aluminium-Chrom-Mischgranat (Y_{2,7}Yb_{0,3}Cr_{1,8}Al_{3,2}O₁₂):

45,92 Yttriumoxid (Y₂O₃), 24,57 g Aluminiumoxid (Al₂O₃), 20,61 g Chrom(III)oxid (Cr₂O₃), 8,9 g Ytterbiumoxid (Yb₂O₃) und 100 g entwässertes Natriumsulfat (Na₂SO₄) werden innig vermischt und im Korundtiegel 12 Stunden auf 1100 °C erhitzt.

Nach dem Abkühlen wird das Reaktionsprodukt zerkleinert mit Wasser das Flussmittel herausgewaschen, als Nebenprodukt entstandenes Natriumchromat mit Schwefelsäure/Eisen(II)sulfat zu Chrom(III)sulfat reduziert, abfiltriert und bei 100 °C an Luft getrocknet. Zur Erzielung einer möglichst hohen Kornfeinheit wird das Pulver anschließend in einer Rührwerkskugelmühle in Wasser entsprechend vermahlen.

Nach dem Filtrieren und Trocknen erhält man ein hellgrünes Pulver mit einer mittleren Korngröße von kleiner als 1 µm.

### Beispiel 5:

### Herstellung von praseodymaktiviertem Yttrium-Aluminium-Chrom-Mischgranat (Y_{2,91}Pr_{0,09}Cr₂Al₃O₁₂):

50,68 g Yttriumoxid (Y₂O₃), 23,59 g Aluminiumoxid (Al₂O₃), 23,45 g Chrom(III)oxid (Cr₂O₃), 2,29 g Praseodymoxid (Pr₂O₃) und 100 g entwässertes Natriumsulfat (Na₂SO₄) werden innig vermischt und im Korundtiegel 12 Stunden auf 1100 °C erhitzt.

Nach dem Abkühlen wird das Reaktionsprodukt zerkleinert, mit Wasser das Flussmittel herausgewaschen, als Nebenprodukt entstandenes Natriumchromat mit Schwefelsäure/Eisen(II)sulfat zu Chrom(III)sulfat reduziert und bei 100 °C an Luft getrocknet. Zur Erzielung einer möglichst hohen Kornfeinheit wird das Pulver anschließend in einer Rührwerkskugelmühle in Wasser entsprechend vermahlen.

Nach dem Filtrieren und Trocknen erhält man ein hellgrünes Pulver mit einer mittleren Korngröße von kleiner als 1 µm.

Die lumineszierenden Substanzen können gemäß der Erfindung auf verschiedenste Art und Weise in das Wertdokument eingebracht werden. So können die lumineszierenden Substanzen beispielsweise einer Druckfarbe zugemischt werden, die zusätzlich visuell sichtbare Farbzusätze enthält. Aber auch ein Zumischen der lumineszierenden Substanz zu einer Papiermasse ist möglich. Ebenso können die lumineszierenden Substanzen auf oder in einem Kunststoffträgermaterial vorgesehen werden, welches beispielsweise zumindest teilweise in eine Papiermasse eingebettet wird. Das Trägermaterial kann hierbei die Form eines Sicherheitsfadens, einer Melierfaser oder einer Planchette haben.

Das Kunststoff- oder Papierträgermaterial kann jedoch auch an jedem beliebigen anderen Gegenstand, z.B. im Rahmen von Produktsicherungsmaßnahmen befestigt werden. Das Trägermaterial ist in diesem Fall vorzugsweise in Form eines Etiketts ausgebildet. Wenn das Trägermaterial Bestandteil des zu sichernden Gegenstandes ist, wie es bei Aufreißfäden der Fall ist, ist selbstverständlich auch jede andere Formgebung möglich. In bestimmten Anwendungsfällen kann es auch sinnvoll sein, die lumineszierende Substanz als unsichtbare Beschichtung auf dem Wertdokument vorzusehen. Sie kann dabei vollflächig oder aber auch in Form von bestimmten Mustern, wie z.B. Streifen, Linien, Kreisen oder auch in Form von alphanummerischen Zeichen vorliegen.

Unter der Bezeichnung "Wertdokument" sind im Rahmen der Erfindung Banknoten, Schecks, Aktien, Wertmarken, Ausweise, Kreditkarten, Pässe und auch andere Dokumente sowie Etiketten, Siegel, Verpackungen oder andere Gegenstände für die Produktsicherung zu verstehen.

Fig. 6 zeigt eine Ausführungsform eines erfindungsgemäßen Sicherheitselements. Das Sicherheitselement besteht in diesem Fall aus einem Etikett 5, das sich aus einer Papier- oder Kunststoffschicht 6, einer transparenten Abdeckschicht 7 sowie einer Klebstoffschicht 8 zusammensetzt. Dieses Etikett 5 ist über die Kleberschicht 8 mit einem beliebigen Substrat 10 verbunden. Bei diesem Substrat 10 kann es sich um Wertdokumente, Ausweise, Pässe, Urkunden oder dergleichen aber auch um andere zu sichernde Gegenstände, wie beispielsweise CDs, Verpackungen o. ä. handeln.

Der Lumineszenzstoff 9 ist in diesem Ausführungsbeispiel im Volumen der Schicht 6 enthalten. Handelt es sich bei der Schicht 6 um eine Papierschicht, so beträgt die Konzentration an Lumineszenzstoff zwischen 0,05 und 1 Gew.%.

Alternativ könnte der Lumineszenzstoff auch in einer nicht gezeigten Druckfarbe enthalten sein, die auf eine der Etikettenschichten, vorzugsweise auf die Oberfläche der Schicht 6 aufgedruckt wird. Die Konzentration an Lumineszenzstoff in der Druckfarbe bewegt sich in diesem Fall im Bereich von 10 bis 40 Gew.%.

Statt den Lumineszenzstoff in oder auf einem Trägermaterial vorzusehen, das anschließend als Sicherheitselement auf einem Gegenstand befestigt wird, ist es gemäß der Erfinding auch möglich, die lumineszierende Substanz direkt in das zu sichernde Wertdokument bzw. auf dessen Oberfläche in Form einer Beschichtung vorzusehen.

## Patentansprüche

1. Bedrucktes Wertdokument mit zumindest einem Echtheitsmerkmal in Form einer lumineszierenden Substanz auf der Basis von mit wenigstens einem Seltenerdmetall dotierten Wirtsgitter, das im Wesentlichen im gesamten sichtbaren Spektralbereich absorbiert, in wesentlichen Teilen des sichtbaren Spektralbereichs anregbar und zumindest im Wellenlängenbereich zwischen 0,8µm und 1,1µm wenigstens teilweise transparent ist, wobei das Seltenerdmetall im Wellenlängenbereich von 0,8µm und 1,1µm emittiert, und das Wirtsgitter als absorbierende Substanz Chrom in einer solchen Konzentration enthält, dass eine Verstärkung der Emission der lumineszierenden Substanz auftritt.

2. Bedrucktes Wertdokument nach Anspruch 1, **dadurch gekennzeichnet, dass** das Seltenerdmetall Ytterbium, Praseodym oder Neodym ist.

3. Bedrucktes Wertdokument nach Anspruch 1 oder 2, **dadurch gekennzeichnet, dass** das Wirtsgitter nur eine Seltenerdmetall-Dotierung aufweist.

4. Bedrucktes Wertdokument nach wenigstens einem der Ansprüche 1 bis 3, **dadurch gekennzeichnet, dass** die Chromkonzentration im Bereich von 2 bis 30 Gew.%, vorzugsweise von 5 bis 15 Gew. % liegt.

5. Bedrucktes Wertdokument nach wenigstens einem der Ansprüche 1 bis 4, **dadurch gekennzeichnet, dass** das Seltenerdmetall in einer Konzentration von 0,5 bis 20 Gew.%, vorzugsweise von 0,8 bis 13 Gew.% liegt.

6. Bedrucktes Wertdokument nach wenigstens einem der Ansprüche 1 bis 5, **dadurch gekennzeichnet, dass** das Wirtsgitter eine Granat- oder Perovskitstruktur aufweist.

7. Bedrucktes Wertdokument nach wenigstens einem der Ansprüche 1 bis 6, **dadurch gekennzeichnet, dass** sich die Granatstrukrur durch die allgemeine Formel
A₃Cr₅₋ₓAlₓO₁₂
beschreiben lässt, worin
A für ein Element aus der Gruppe Scandium, Yttrium, Lanthanide, Actinide steht und der Index x die Bedingung 0 < x < 4,99 erfüllt.

8. Bedrucktes Wertdokument nach Anspruch 7, **dadurch gekennzeichnet, dass** der Index x die Bedingung 0,3 < x < 2,5, vorzugsweise 0,5 < x < 2 erfüllt.

9. Bedrucktes Wertdokument nach Anspruch 7 oder 8, **dadurch gekennzeichnet, dass** die lumineszierende Substanz durch die Formel
Y_{3-z}Nd_{z}Cr₅₋ₓAlₓO₁₂
beschrieben wird, worin der Index z die Bedingung 0 < z < 1, vorzugsweise 0,02 < z <0,1 erfüllt.

10. Bedrucktes Wertdokument nach Anspruch 7 oder 8, **dadurch gekennzeichnet, dass** die lumineszierende Substanz durch die Formel
Y_{3-z}Yb_{z}Cr₅₋ₓAlₓO₁₂
beschrieben wird, worin der Index z die Bedingung erfüllt 0 < z < 1, vorzugsweise 0,05 < z < 0,3 erfüllt.

11. Bedrucktes Wertdokument nach Anspruch 7 oder 8, **dadurch gekennzeichnet, dass** die lumineszierende Substanz durch die Formel
Y_{3-z}Pr_{z}Cr₅₋ₓAlₓO₁₂
beschrieben wird, worin der Index Z die Bedingung 0 < z < 1, vorzugsweise 0,01 < z < 0,5 erfüllt.

12. Bedrucktes Wertdokument nach wenigstens einem der Ansprüche 1 bis 6, **dadurch gekennzeichnet, dass** sich die Perovskitstruktur durch die allgemeine Formel
ACrO₃
beschreiben lässt, worin
A für ein Element aus der Gruppe Yttrium, Scandium oder der Lanthanide steht.

13. Bedrucktes Wertdokument nach Anspruch 12, **dadurch gekennzeichnet, dass** die lumineszierende Substanz durch die allgemeine Formel
Y_{1-z}Nd_{z}CrO₃
beschrieben wird, worin der Index z die Bedingung 0 < z < 1, vorzugsweise 0,01 < z < 0,2 erfüllt.

14. Bedrucktes Wertdokument nach Anspruch 12, **dadurch gekennzeichnet, dass** die lumineszierende Substanz durch die allgemeine Formel
Y_{1-z}Yb_{z}CrO₃
beschrieben wird, worin der Index Z die Bedingung 0 < z < 1, vorzugsweise 0,1 < z < 0,5 erfüllt.

15. Bedrucktes Wertdokument nach Anspruch 12, **dadurch gekennzeichnet, dass** die lumineszierende Substanz durch die allgemeine Formel
Y_{1-z}Pr_{z}CrO₃
beschrieben wird, worin der Index z die Bedingung 0 < z < 1, vorzugsweise 0,001 < z < 0,1 erfüllt.

16. Bedrucktes Wertdokument nach wenigstens einem der Ansprüche 1 bis 15, **dadurch gekennzeichnet, dass** die lumineszierende Substanz einer Druckfarbe zugemischt ist, die zusätzlich visuell sichtbare Farbzusätze enthält.

17. Bedrucktes Wertdokument nach wenigstens einem der Ansprüche 1 bis 15, **dadurch gekennzeichnet, dass** die lumineszierende Substanz im Volumen des Wertdokuments, welches vorzugsweise aus Papier besteht, zugemischt ist.

18. Bedrucktes Wertdokument nach wenigstens einem der Ansprüche 1 bis 15, **dadurch gekennzeichnet, dass** die lumineszierende Substanz als unsichtbare zumindest teilweise Beschichtung auf dem Wertdokument vorgesehen ist.

19. Bedrucktes Wertdokument nach Anspruch 18, **dadurch gekennzeichnet, dass** die Beschichtung die Form eines Streifens aufweist.

20. Sicherheitselement, welches zumindest ein Trägermaterial und eine lumineszierende Substanz auf der Basis von mit wenigstens einem Seltenerdmetall dotierten Wirtsgitter aufweist, das im Wesentlichen im sichtbaren Spektralbereich absorbiert, in wesentlichen Teilen des sichtbaren Spektralbereichs anregbar und zumindest im Wellenlängenbereich zwischen 0,8 µm und 1,1 µm wenigstens teilweise transparent ist, wobei das Seltenerdmetall im Wellenlängenbereich von 0,8 µm und 1,1 µm emittiert, und das Wirtsgitter als absorbierende Substanz Chrom in einer solchen Konzentration enthält, dass eine Verstärkung der Emission der lumineszierenden Substanz auftritt.

21. Sicherheitselement nach Anspruch 20, **dadurch gekennzeichnet, dass** die lumineszierende Substanz in dem Volumen des Trägermaterials vorgesehen ist.

22. Sicherheitselement nach Anspruch 21, **dadurch gekennzeichnet, dass** die lumineszierende Substanz im Trägermaterial in einer Konzentration von 0,01 bis 10 Gew.%, vorzugsweise von 0,1 bis 5 Gew.% vorliegt.

23. Sicherheitselement nach Anspruch 20, **dadurch gekennzeichnet, dass** die lumineszierende Substanz in einer auf das Trägermaterial aufgebrachten Schicht vorliegt.

24. Sicherheitselement nach Anspruch 23, **dadurch gekennzeichnet, dass** die lumineszierende Substanz in einer Druckfarbe in einer Konzentration von 0,5 bis 40 Gew.%, vorzugsweise von 20 bis 30 Gew.% vorliegt.

25. Sicherheitselement nach wenigstens einem der Ansprüche 20 bis 24, **dadurch gekennzeichnet, dass** das Trägermaterial aus Kunststoff besteht.

26. Sicherheitselement nach wenigstens einem der Ansprüche 20 bis 24, **dadurch gekennzeichnet, dass** das Trägermaterial aus Papier besteht.

27. Sicherheitselement nach wenigstens einem der Ansprüche 20 bis 26, **dadurch gekennzeichnet, dass** das Trägermaterial als Sicherheitsfaden, Melierfaser, Planchette oder Etikett ausgebildet ist.

## Claims

1. A printed document of value with at least one authentication feature in the form of a luminescent substance based on a host lattice doped with at least one rare earth metal that absorbs substantially throughout the visible region of the spectrum, is excitable in substantial parts of the visible region of the spectrum, and at least partially transparent at least in the wavelength range between 0.8 microns and 1.1 microns, the rare earth metal emitting in the wavelength range between 0.8 microns and 1.1 microns, and the host lattice containing chromium as an absorptive substance in such a concentration that amplification of the emission by the luminescent substance occurs.

2. A printed document of value according to claim 1, **characterized in that** the rare earth metal is ytterbium, praseodymium or neodymium.

3. A printed document of value according to claim I or 2, **characterized in that** the host lattice has only one rare earth metal doping.

4. A printed document of value according to at least one of claims 1 to 3, **characterized in that** the chromium concentration is in the range from 2 to 30 percent by weight, preferably from 5 to 15 percent by weight.

5. A printed document of value according to at least one of claims 1 to 4, **characterized in that** the rare earth metal is present in a concentration from 0.5 to 20 percent by weight, preferably from 0.8 to 13 percent by weight.

6. A printed document of value according to at least one of claims 1 to 5, **characterized in that** the host lattice has a garnet or perovskite structure.

7. A printed document of value according to at least one of claims 1 to 6, **characterized in that** the garnet structure satisfies the general formula
A₃Cr₅₋ₓAlₓO₁₂
where A stands for an element selected from the group consisting of scandium, yttrium, the lanthanides and the actinides, and the index x fulfils the condition 0<x<4.99.

8. A printed document of value according to claim 7, **characterized in that** the index x fulfils the condition 0.3<x<2.5, preferably 0.5<x<2.

9. A printed document of value according to claim 7 or 8, **characterized in that** the luminescent substance satisfies the formula
Y_{3-z}Nd_{z}Cr₅₋ₓAlₓO₁₂
where the index z fulfils the condition 0<z<1, preferably 0.02<z<0.1.

10. A printed document of value according to claim 7 or 8, **characterized in that** the luminescent substance satisfies the formula
Y_{3-z}Yb_{z}Cr₅₋ₓAlₓO₁₂
where the index z fulfils the condition 0<z<1, preferably 0.05<z<0.3.

11. A printed document of value according to claim 7 or 8, **characterized in that** the luminescent substance satisfies the formula
Y_{3-z}Pr_{z}Cr₅₋ₓAlₓO₁₂
where the index z fulfils the condition 0<z<1, preferably 0.01<z<0.5.

12. A printed document of value according to at least one of claims 1 to 6, **characterized in that** the perovskite structure satisfies the general formula
ACrO₃
where A stands for an element selected from the group consisting of yttrium, scandium and the lanthanides.

13. A printed document of value according to claim 12, **characterized in that** the luminescent substance satisfies the general formula
Y_{1-z}Nd_{z}CrO₃
where the index z fulfils the condition 0<z<1, preferably 0.01<z<0.2.

14. A printed document of value according to claim 12, **characterized in that** the luminescent substance satisfies the general formula
Y_{1-z}Yb_{z}CrO₃
where the index z fulfils the condition 0<z<1, preferably 0.1<z<0.5.

15. A printed document of value according to claim 12, **characterized in that** the luminescent substance satisfies the general formula
Y_{1-z}Pr_{z}CrO₃
where the index z fulfils the condition 0<z<1, preferably 0.001<z<0.1.

16. A printed document of value according to at least one of claims 1 to 15, **characterized in that** the luminescent substance is admixed to a printing ink that additionally contains visually visible color additives.

17. A printed document of value according to at least one of claims 1 to 15, **characterized in that** the luminescent substance is admixed in the volume of the document of value, which preferably consists of paper.

18. A printed document of value according to at least one of claims 1 to 15, **characterized in that** the luminescent substance is provided as an invisible and at least partial coating on the document of value.

19. A printed document of value according to claim 18, **characterized in that** the coating is in the form of a stripe.

20. A security element having at least one substrate material and a luminescent substance based on a host lattice doped with at least one rare earth metal that absorbs substantially in the visible region of the spectrum, is excitable in substantial parts of the visible region of the spectrum, and at least partially transparent at least in transparent at least in the wavelength region between 0.8 microns and 1.1 microns, the rare earth metal emitting in the wavelength range between 0.8 microns and 1.1 microns, and the host lattice containing chromium as the absorptive substance in such a concentration that amplification of the emission of the luminescent substance occurs.

21. A security element according to claim 20, **characterized in that** the luminescent substance is provided within the volume of the substrate material.

22. A security element according to claim 21, **characterized in that** the luminescent substance is present in the substrate material in a concentration between 0.01 and 10 percent by weight, preferably between 0.1 and 5 percent by weight.

23. A security element according to claim 20, **characterized in that** the luminescent substance is present in a layer applied to the substrate material.

24. A security element according to claim 23, **characterized in that** the luminescent substance is present in a printing ink in a concentration between 0.5 and 40 percent by weight, preferably between 20 and 30 percent by weight.

25. A security element according to at least one of claims 20 to 24, **characterized in that** the substrate material consists of plastic.

26. A security element according to at least one of claims 20 to 24, **characterized in that** the substrate material consists of paper.

27. A security element according to at least one of claims 20 to 26, **characterized in that** the substrate material is formed as a security thread, mottling thread, planchet or label.

## Revendications

1. Document de valeur imprimé comportant au moins une marque d'authenticité sous forme d'une substance luminescente à base d'un réseau hôte doté d'au moins un métal des terres rares, réseau qui pour l'essentiel absorbe dans l'ensemble du domaine spectral visible, est excitable dans les parties essentielles du domaine spectral visible et est transparent, au moins partiellement, au moins dans le domaine de longueurs d'onde allant de 0,8 µm à 1,1 µm, le métal des terres rares émettant dans le domaine de longueurs d'onde compris entre 0,8 µm et 1,1 µm et le réseau hôte contenant du chrome comme substance absorbante dans une concentration telle qu'une intensification de l'émission de la substance luminescente se produit.

2. Document de valeur imprimé selon la revendication 1, **caractérisé en ce que** le métal des terres rares est de l'ytterbium, du praséodyme ou du néodyme.

3. Document de valeur imprimé selon la revendication 1 ou 2, **caractérisé en ce que** le réseau hôte ne présente qu'une seule dotation en métal des terres rares.

4. Document de valeur imprimé selon au moins une des revendications 1 à 3, **caractérisé en ce que** la concentration en chrome se situe dans la plage comprise entre 2 et 30 % en poids, préférablement entre 5 et 15 % en poids.

5. Document de valeur imprimé selon au moins une des revendications 1 à 4, **caractérisé en ce que** le métal des terres rares est présent dans une concentration de 0,5 à 20 % en poids, préférablement de 0,8 à 13 % en poids.

6. Document de valeur imprimé selon au moins une des revendications 1 à 5, **caractérisé en ce que** le réseau hôte présente une structure grenat ou perovskite.

7. Document de valeur imprimé selon au moins une des revendications 1 à 6, **caractérisé en ce que** la structure grenat est désignée par la formule générale
A₃Cr₅₋ₓAlₓO₁₂,
où A correspond à un élément faisant partie du groupe composé du scandium, de l'yttrium, du lanthanide et de l'actinide et où l'indice x remplit la condition 0<x<4,99.

8. Document de valeur imprimé selon la revendication 7, **caractérisé en ce que** l'indice x remplit la condition 0,3 < x < 2,5, préférablement 0,5 < x < 2.

9. Document de valeur imprimé selon la revendication 7 ou 8, **caractérisé en ce que** la substance luminescente est désignée par la formule
Y_{3-z}Nd_{z}Cr₅₋ₓAlₓO₁₂,
où l'indice z remplit la condition 0 < z < 1, préférablement 0,02 < z < 0,1.

10. Document de valeur imprimé selon la revendication 7 ou 8, **caractérisé en ce que** la substance luminescente est désignée par la formule
Y_{3-z}Yb_{z}Cr₅₋ₓAlₓO₁₂,
où l'indice z remplit la condition 0 < z < 1, préférablement 0,05 < z < 0,3.

11. Document de valeur imprimé selon la revendication 7 ou 8, **caractérisé en ce que** la substance luminescente est désignée par la formule
Y_{3-z}Pr_{z}Cr₅₋ₓAlₓO₁₂,
où l'indice z remplit la condition 0 < z < 1, préférablement 0,01 < z < 0,5.

12. Document de valeur imprimé selon au moins une des revendications 1 à 6, **caractérisé en ce que** la structure perovskite est désignée par la formule générale
ACrO₃,
où A correspond à un élément faisant partie du groupe composé de l'yttrium, du scandium ou du lanthanide.

13. Document de valeur imprimé selon la revendication 12, **caractérisé en ce que** la substance luminescente est désignée par la formule générale
Y_{1-z}Nd_{z}CrO₃,
où l'indice z remplit la condition 0 < z < 1, préférablement 0,01 < z < 0,2.

14. Document de valeur imprimé selon la revendication 12, **caractérisé en ce que** la substance luminescente est désignée par la formule générale
Y_{1-z}Yb_{z}CrO₃,
où l'indice z remplit la condition 0 < z < 1, préférablement 0,1 < z < 0,5.

15. Document de valeur imprimé selon la revendication 12, **caractérisé en ce que** la substance luminescente est désignée par la formule générale
Y_{1-z}Pr_{z}CrO₃,
où l'indice z remplit la condition 0 < z < 1, préférablement 0,001 < z < 0,1.

16. Document de valeur imprimé selon au moins une des revendications 1 à 15, **caractérisé en ce que** la substance luminescente est mélangée à une encre d'imprimerie qui contient en outre des colorants visuellement perceptibles.

17. Document de valeur imprimé selon au moins une des revendications 1 à 15, **caractérisé en ce que** la substance luminescente est mélangée dans le volume du document de valeur, lequel est de préférence constitué de papier.

18. Document de valeur imprimé selon au moins une des revendications 1 à 15, **caractérisé en ce que** la substance luminescente est prévue comme couche au moins partiellement invisible sur le document de valeur.

19. Document de valeur imprimé selon la revendication 18, **caractérisé en ce que** cette couche se présente sous forme d'une bande.

20. Élément de sécurité présentant au moins un matériau de support et une substance luminescente à base d'un réseau hôte doté d'au moins un métal des terres rares, réseau qui pour l'essentiel absorbe dans l'ensemble du domaine spectral visible, est excitable dans les parties essentielles du domaine spectral visible et est transparent, au moins partiellement, au moins dans le domaine de longueurs d'onde allant de 0,8 µm à 1,1 µm, le métal des terres rares émettant dans le domaine de longueurs d'onde compris entre 0,8 µm et 1,1 µm et le réseau hôte contenant du chrome comme substance absorbante dans une concentration telle qu'une intensification de l'émission de la substance luminescente se produit.

21. Élément de sécurité selon la revendication 20, **caractérisé en ce que** la substance luminescente est prévue dans le volume du matériau de support.

22. Élément de sécurité selon la revendication 21, **caractérisé en ce que** la substance luminescente du matériau de support est présente dans une concentration de 0,01 à 10 % en poids, préférablement de 0,1 à 5 % en poids.

23. Élément de sécurité selon la revendication 20, **caractérisé en ce que** la substance luminescente est présente dans une couche appliquée sur le matériau de support.

24. Élément de sécurité selon la revendication 23, **caractérisé en ce que** la substance luminescente est présente dans une encre d'imprimerie dans une concentration de 0,5 à 40 % en poids, préférablement de 20 à 30 % en poids.

25. Élément de sécurité selon au moins une des revendications 20 à 24, **caractérisé en ce que** le matériau de support est constitué de matière plastique.

26. Élément de sécurité selon au moins une des revendications 20 à 24, **caractérisé en ce que** le matériau de support est constitué de papier.

27. Élément de sécurité selon au moins une des revendications 20 à 26, **caractérisé en ce que** le matériau de support est composé d'un filament de sécurité, d'une fibre chinée, d'une planchette ou d'une étiquette.
